# FASCICULE DE BREVET EUROPEEN

(11) **EP 0 991 461 B1**
(45) Date de publication et mention de la délivrance du brevet: **03.12.2003**
(21) Numéro de dépôt: 99914617.8
(22) Date de dépôt: 20.04.1999
(51) Int. Cl.: B01D 53/14

(54) **PROCEDE REGENERATIF DE DESACIDIFICATION D'UN GAZ RENFERMANT DU CO2 AINSI QUE DES HYDROCARBURES LIQUIDES, A L'AIDE D'UN LIQUIDE ABSORBANT A BASE DE METHYLDIETHANOLAMINE ACTIVEE**
REGENERATIVES VERFAHREN ZUR ENTSAÜERUNG VON EINEM CO2 SOWIE FLÜSSIGE KOHLENWASSERSTOFFE ENTHALTENDEN GAS, MITTELS EINER ABSORBIERENDEN FLÜSSIGKEIT AUF BASIS VON AKTIVIERTEM METHYLDIETHANOLAMIN
REGENERATIVE METHOD FOR DE-ACIDIFYING A GAS CONTAINING CO2 AND LIQUID HYDROCARBONS, USING AN ABSORBING LIQUID BASED ON ACTIVATED METHYLDIETHANOLAMINE

(30) Priorité: 22.04.1998 FR 9805035
(43) Date de publication de la demande: 12.04.2000
(73) Titulaire: Elf Exploration Production, 92400 Courbevoie (FR)
(72) Inventeur: PEYTAVY, Jean-Louis, F-64320 Lescar (FR); CAPDEVILLE, Serge, F-64230 Poey de Lescar (FR); LACAMOIRE, Hervé, F-64230 Arbus (FR)
(74) Mandataire: Cabinet Hirsch
(86) Numéro de dépôt international: FR9900922
(87) Numéro de publication internationale: WO99054024

(56) Documents cités:
- EP-A- 0 184 408
- WO-A-95/03874
- FR-A- 2 631 852

## Description

L'invention concerne un procédé régénératif de désacidification d'un gaz renfermant du CO₂ ainsi que des hydrocarbures liquides, à l'aide d'un absorbant liquide à base de méthyldiéthanolamine activée.

La citation WO-A-8911327 décrit un procédé régénératif de désacidification d'un gaz renfermant du CO₂ et éventuellement d'autres composés gazeux acides comme H₂S, à l'aide d'un liquide absorbant à base de méthyldiéthanolamine (MDEA) activée, c'est-à-dire d'un liquide absorbant consistant en une solution aqueuse de MDEA et d'un activateur de l'absorption du CO₂ par la MDEA. Ce procédé de désacidification, c'est-à-dire d'élimination du CO₂ et des autres composés gazeux acides éventuels contenus dans le gaz, comporte une étape d'absorption, dans laquelle on met le gaz à désacidifier en contact avec le liquide absorbant, dans une zone d'absorption, pour produire un gaz traité à teneur réduite en CO₂ et un liquide absorbant chargé de CO₂, et une étape de régénération, dans laquelle on soumet le liquide absorbant chargé de CO₂ à un traitement de régénération, notamment par détente, pour libérer ledit CO₂ et produire, d'une part, au moins une fraction gazeuse acide riche en CO₂ et, d'autre part, au moins un liquide absorbant régénéré, c'est-à-dire à teneur réduite en CO₂, qui est recyclé dans la zone d'absorption.

L'activateur associé à la MDEA dans le liquide absorbant peut être choisi parmi :
i) les polyalkylènepolyamines, notamment diéthylènetriamine, triéthylènetétramine, tétraéthylènepentamine et dipropylènetriamine,
ii) les alcoylènediamines et cycloalcoylènediamines, notamment hexaméthylènediamine, aminoéthyléthanolamine, diméthylaminopropylamine et diamino-1,2 cyclohexane,
iii) les dérivés aminoalkyles d'hétérocycles tels que pipérazine, pipéridine, furanne, tétrahydrofuranne thiophène et tétrahydrothiophène, notamment aminoéthylpipérazine, aminopropylpipérazine, aminoéthylpipéridine, aminopropylpipéridine et furfurylamine,
iv) les alcoxyalkylamines, notamment méthoxypropylamine et éthoxypropylamine, et
v) les alkylmonoalcanolamines, notamment éthylmonoéthanolamine et butylmonoéthanolamine.

Comme il ressort des informations fournies par les exemples de la citation, les activateurs précités, mis en oeuvre dans le traitement d'élimination du CO₂ contenu dans un gaz tel que le méthane à l'aide d'un liquide absorbant à base de MDEA activée, ont des efficacités sensiblement équivalentes eu égard à l'accélération de l'absorption du CO₂ par la MDEA.

Les gaz renfermant du CO₂ et notamment les gaz naturels renfermant du CO₂, que l'on soumet industriellement au traitement de désacidification à l'aide d'un liquide absorbant à base de MDEA activée, peuvent contenir des hydrocarbures liquides en concentration globale plus ou moins élevée. On considère, dans la pratique, qu'un gaz à traiter renfermant du CO₂ est pratiquement exempt d'hydrocarbures si sa teneur globale en ces produits est inférieure à un seuil représentant 14 litres d'hydrocarbures liquides par million de mètres cubes normaux de gaz.

La demanderesse a constaté que la présence d'hydrocarbures liquides, en quantité globale supérieure au seuil mentionné ci-dessus, dans un gaz à désacidifier renfermant du CO₂ perturbait fortement l'action des activateurs précités sur l'absorption dudit CO₂ par la MDEA et elle a trouvé que les activateurs consistant en aminoalkyléthanolamines inférieures telles que l'aminoéthyléthanolamine conduisaient, lorsque le gaz renfermant du CO₂ à désacidifier contient des hydrocarbures liquides, à une absorption du CO₂ par la MDEA supérieure d'environ 15% à 20% à l'absorption obtenue dans des conditions comparables en présence des autres activateurs proposés dans la citation WO-A-8911327.

L'invention a donc comme objet un procédé régénératif de désacidification d'un gaz renfermant du CO₂ ainsi que des hydrocarbures liquides, du type comportant une étape d'absorption, dans laquelle on met le gaz à traiter en contact, dans une zone d'absorption, avec un liquide absorbant à base de méthyldiéthanolamine (MDEA) et d'un accélérateur de l'absorption du CO₂ par ladite amine, pour produire un gaz traité à teneur réduite en CO₂ et un liquide absorbant chargé de CO₂, et une étape de régénération, dans laquelle on soumet le liquide absorbant chargé à un traitement de régénération pour libérer le CO₂ qu'il a fixé et produire, d'une part, au moins une fraction gazeuse acide riche en CO₂ et, d'autre part, au moins un liquide absorbant régénéré, qui est recyclé dans la zone d'absorption, ledit procédé se caractérisant en ce que la teneur globale en hydrocarbures liquides dans le gaz à désacidifier renfermant CO₂ est supérieure à 14 litres d'hydrocarbures liquides par million de mètres cubes normaux de gaz et en ce que l'activateur associé à la méthyldiéthanolamine, dans le liquide absorbant mis en contact avec le gaz renfermant du CO₂ et des hydrocarbures liquides, consiste en au moins un composé de formule H₂N-CₙH₂ₙ-NH-CH₂-CH₂OH, dans laquelle n représente un nombre entier allant de 1 à 4.

En particulier, l'activateur associé à la MDEA est choisi parmi les composés de formule H₂N-(CH₂)ₚ-NH-CH₂-CH₂OH, dans laquelle p est en nombre entier égal à 2, 3 ou 4, ledit activateur consistant tout spécialement en le composé aminoéthyléthanolamine de formule H₂N-CH₂-CH₂-NH-CH₂-CH₂OH.

Le liquide absorbant se présente avantageusement sous la forme d'une solution aqueuse de MDEA et de l'activateur. Le cas échéant, ladite solution aqueuse peut encore renfermer une quantité mineure d'un ou plusieurs solvants organiques du CO₂ solubles dans l'eau, notamment sulfolane, méthanol ou N-méthylpyrrolidone.

La concentration du liquide absorbant en MDEA peut être comprise entre 1N et 6N et, de préférence, elle se situe de 2,5N à 5N.

La quantité d'activateur, que l'on associe à la MDEA dans le liquide absorbant, peut varier assez largement. Ladite quantité est avantageusement telle que le rapport du nombre de moles d'activateur au nombre total de moles d'activateur et de MDEA soit compris entre 0,01 et 0,5 et de préférence aille de 0,05 à 0,25.

Selon l'invention, le gaz à traiter renferme du CO₂ ainsi que des hydrocarbures liquides et il peut encore contenir un ou plusieurs composés gazeux acides, autres que CO₂, comme, par exemple H₂S. Un tel gaz est en particulier un gaz naturel et sa teneur globale en CO₂ et autres composés gazeux acides éventuels comme H₂S peut aller de quelques dixièmes de pour cent à quelques dizaines de pour cents en volume.

La teneur globale en hydrocarbures liquides du gaz à traiter est supérieure à 14 litres d'hydrocarbures liquides par million de mètres cubes normaux (Nm³) de gaz, ladite teneur pouvant aller, notamment, jusqu'à 10 m³ ou plus par million de Nm³ de gaz. Le volume de gaz exprimé en "mètres cubes normaux" représente le volume de gaz calculé en mètres cubes dans les conditions normales de température et de pression, c'est-à-dire 0°C et 1 atmosphère.

Par hydrocarbures liquides, on entend selon l'invention tous les hydrocarbures présents dans le gaz, qui sont liquides dans les conditions de mise en oeuvre du contact entre le liquide absorbant et le gaz à traiter. Les hydrocarbures liquides peuvent être, notamment, des hydrocarbures paraffiniques, des hydrocarbures aromatiques ou encore des hydrocarbures naphténiques, tels que ceux qui sont habituellement présents dans les gaz naturels extraits des gisements.

Comme indiqué plus haut, la mise en oeuvre du procédé selon l'invention comporte une étape d'absorption, dans laquelle le gaz à traiter et le liquide absorbant sont mis en contact, de préférence à contre-courant, dans une zone d'absorption pour produire un gaz traité à teneur réduite en CO₂ et autres éventuels composés gazeux acides, ladite teneur correspondant généralement à celle des spécifications imposées pour le gaz traité, et un liquide absorbant chargé de CO₂ et autres éventuels composés gazeux acides, et une étape de régénération, dans laquelle ledit liquide absorbant chargé est soumis à un traitement de régénération pour libérer le CO₂ et les autres composés gazeux acides éventuels retenus par le liquide absorbant et produire, d'une part, au moins une fraction gazeuse acide riche en CO₂ et, d'autre part, au moins un absorbant liquide régénéré, qui est recyclé dans la zone d'absorption.

La zone d'absorption, dans laquelle est réalisée la mise en contact du gaz à désacidifier avec le liquide absorbant est, de préférence, équipée d'un garnissage structuré ou non structuré permettant d'assurer une aire de contact importante entre le liquide absorbant et le gaz. Toutefois, d'autres éléments de contact gaz/liquide, notamment plateaux de contact gaz/liquide, peuvent également équiper la zone d'absorption.

La régénération du liquide absorbant chargé de CO₂ et des autres composés gazeux acides éventuels, notamment H₂S,est réalisée avantageusement par détente, en une ou plusieurs étapes, d'au moins une partie dudit liquide absorbant chargé, ce qui se traduit par une économie substantielle de l'énergie à utiliser pour cette régénération.

Selon un mode de mise en oeuvre de la régénération, la totalité du liquide absorbant chargé est détendue, en une ou plusieurs étapes, pour libérer la majeure partie du CO₂ présent dans ledit liquide absorbant chargé, puis le liquide absorbant détendu est soumis à une régénération complémentaire par stripage à la vapeur, par chauffage direct ou indirect du liquide absorbant, le liquide absorbant issu de la régénération complémentaire étant recyclé dans la zone d'absorption et notamment dans la partie supérieure de ladite zone. Dans une variante de ce mode de mise en oeuvre, une partie seulement du liquide absorbant détendu est soumise à la régénération complémentaire par stripage, le liquide absorbant issu de ladite régénération complémentaire étant, comme indiqué précédemment, recyclé dans la partie supérieure de la zone d'absorption tandis que la partie du liquide absorbant détendu non soumise à la régénération complémentaire est recyclée dans la zone d'absorption, en un point de cette dernière situé en dessous du point de recyclage du liquide absorbant régénéré par stripage.

Selon un autre mode de mise en oeuvre de la régénération, une fraction du liquide absorbant chargé est détendue pour libérer la majeure partie du CO₂ qu'elle renferme tandis que la fraction restante du liquide absorbant chargé est soumise directement à une régénération par stripage à la vapeur, par chauffage direct ou indirect de ladite fraction restante, la fraction de liquide absorbant régénérée par stripage étant recyclée dans la partie supérieure de zone d'absorption tandis que la fraction de liquide absorbant détendue est recyclée dans la zone d'absorption en dessous du point de recyclage du liquide absorbant régénéré par stripage.

Le liquide absorbant chargé issu de la zone d'absorption peut être soumis à une détente préliminaire pour libérer les gaz non acides tels que les hydrocarbures retenus par le liquide absorbant, avant d'effectuer la régénération proprement dite.

Les étapes d'absorption et de régénération du procédé selon l'invention, qui sont schématisées ci-dessus, peuvent être mise en oeuvre dans tout dispositif permettant de réaliser la désacidification d'un gaz à l'aide d'un liquide absorbant régénérable et en particulier dans ceux desdits dispositifs permettant d'effectuer une régénération au moins partielle du liquide absorbant chargé par détente et éventuellement de compléter cette régénération par une régénération par stripage. Conviennent en particulier des dispositifs analogues à ceux qui sont schématisés dans les citations US-A-3 622 267 et US-A-4 336 233.

La zone d'absorption, dans laquelle est mis en oeuvre le contact du gaz à désacidifier avec le liquide absorbant, peut consister en particulier en une colonne pourvue d'un garnissage structuré ou non structuré, bien que d'autres types de colonnes, par exemple colonnes à plateaux, soient également utilisables.

Les conditions opératoires pour la mise en oeuvre des étapes d'absorption et de régénération précitées, notamment température, pression, débit de gaz et débit de liquide absorbant, sont dans les gammes préconisées pour les procédés de désacidification de gaz à l'aide de liquides absorbants à base de MDEA.

Ainsi, l'étape d'absorption, dans laquelle le gaz à traiter, qui renferme CO₂, des hydrocarbures liquides et éventuellement un ou plusieurs composés gazeux acides autres que CO₂, est lavé par le liquide absorbant, peut être mise en oeuvre à des températures comprises entre 10°C et 100°C et plus particulièrement comprises entre 30°C et 60°C et sous des pressions absolues comprises entre 1,5 et 120 bars. Avantageusement, la pression dans la zone d'absorption est choisie dans la gamme précitée de telle sorte que la pression partielle du CO₂ dans le gaz circulant dans ladite zone ait une valeur égale ou supérieure à 3 bars absolus.

La régénération par détente est également effectuée à la température à laquelle se trouve le liquide absorbant chargé à détendre, les pressions atteintes après chaque détente étant inférieures à la pression du liquide absorbant chargé soutiré de la zone d'absorption et décroissant d'une détente à la suivante lorsque plusieurs détentes successives sont effectuées. La régénération par stripage est réalisée de manière conventionnelle en soumettant le liquide absorbant à un rebouillage dans une zone de stripage maintenue en tête à une température comprise entre 80°C et 150°C environ et sous une pression inférieure à 5 bars absolus et le plus souvent comprise entre 1,3 et 2,5 bars absolus. Lorsque la régénération par détente, en une ou plusieurs étapes, est suivie d'une régénération complémentaire par stripage, la pression du liquide absorbant détendu envoyé à la régénération par stripage est choisie pour être voisine de la pression en tête de la zone de stripage.

L'invention est illustrée par l'exemple suivant donné à titre non limitatif.

### EXEMPLE :

On effectuait des essais témoins (essais I à VI) et selon l'invention (essai VII) d'absorption du CO₂ contenu dans un gaz renfermant également des hydrocarbures liquides, à l'aide de liquides absorbants consistant en solutions aqueuses de MDEA et d'un activateur témoin (essais I à VI) ou de MDEA et d'un activateur selon l'invention (essai VII).

Les activateurs utilisés dans ces essais étaient les suivants :
Activateurs témoins :
   . Essai I : diéthylènetriamine (DETA)
   . Essai II : hexaméthylènediamine (HMDA)
   . Essai III : diamino-1,2 cyclohexane (DACH)
   . Essai IV : butylmonoéthanolamine (BEA)
   . Essai V : aminoéthylpipéridine (AEPD)
   . Essai VI : aminoéthylpipérazine (AEPZ)
Activateur selon l'invention :
   . Essai VII : aminoéthyléthanolamine (AEEA)

Dans chaque essai, on lavait le gaz à traiter à l'aide du liquide absorbant choisi en opérant dans une colonne munie en tête d'une sortie pour les gaz, dans sa partie supérieure d'une entrée pour les liquides, dans sa partie inférieure d'une entrée pour les gaz et en fond d'une sortie pour les liquides, l'espace intérieur de la colonne compris entre lesdites entrées pour les liquides et pour les gaz ayant un diamètre de 0, 2 mètre et étant pourvu, sur une hauteur de 3,5 mètres, d'un garnissage structuré du type garnissage Mellapak® commercialisé par la société SULZER.

Par l'entrée pour les gaz de la colonne, on injectait, avec un débit de 330 Nm³/h, un gaz renfermant en volume 20% de CO₂ et 80% de méthane, ledit gaz recevant, à son entrée dans la colonne, une injection, représentant 0,33 litre/h,d'hydrocarbures liquides consistant en une coupe d'hydrocarbures en C₉ à C₁₃ ayant une densité égale à 0,8. Par l'entrée pour les liquides de ladite colonne, on introduisait le liquide absorbant choisi avec un débit de 2,3 m³/h, ledit liquide absorbant consistant en une solution aqueuse renfermant 3,4 moles/litre de MDEA et 0,6 mole/litre d'activateur, ainsi que 60 g/litre de CO₂. En tête de la colonne, on évacuait un gaz traité appauvri en CO₂ et en fond de ladite colonne on soutirait un liquide absorbant chargé en CO₂.

La pression absolue et la température en tête de la colonne avaient, dans les différents essais, des valeurs égales respectivement à 40 bars et 50°C.

Le gaz épuré sortant de la colonne était analysé par chromatographie en phase gazeuse pour déterminer sa teneur en CO₂.

Les résultats obtenus pour les différents essais sont rassemblés dans le tableau ci-après.

**TABLEAU**

| Essai | Activateur | CO₂ dans le gaz épuré (% en volume) |
|---|---|---|
| Témoin | | |
| I | DETA | 6,50 |
| II | HMDA | 6,90 |
| III | DACH | 6,95 |
| IV | BEA | 6,75 |
| V | AEPD | 6,75 |
| VI | AEPZ | 6,50 |

| Invention | | |
|---|---|---|
| VII | AEEA | 3,30 |

L'examen des résultats figurant dans le tableau ci-dessus fait apparaître, qu'en présence d'hydrocarbures liquides dans le gaz à désacidifier, le liquide absorbant à base de MDEA et de l'activateur AEEA (aminoéthyléthanolamine) utilisé selon l'invention (essai VII) absorbe, dans des conditions opératoires comparables, une quantité de CO₂ plus importante (augmentation de 15% à 20%) que chacun des liquides absorbants témoins (essais I à VI) à base de MDEA et de l'activateur témoin utilisé.

## Revendications

1. Procédé régénératif de désacidification d'un gaz renfermant du CO₂ ainsi que des hydrocarbures liquides, du type comportant une étape d'absorption, dans laquelle on met le gaz à traiter en contact, dans une zone d'absorption, avec un liquide absorbant à base de méthyldiéthanolamine (MDEA) et d'un accélérateur de l'absorption du CO₂ par ladite amine, pour produire un gaz traité à teneur réduite en CO₂ et un liquide absorbant chargé de CO₂, et une étape de régénération, dans laquelle on soumet le liquide absorbant chargé à un traitement de régénération pour libérer le CO₂ qu'il a fixé et produire, d'une part, au moins une fraction gazeuse acide riche en CO₂ et, d'autre part, au moins un liquide absorbant régénéré, qui est recyclé dans la zone d'absorption, ledit procédé **se caractérisant en ce que** la teneur globale en hydrocarbures liquides dans le gaz à désacidifier renfermant CO₂ est supérieure à 14 litres d'hydrocarbures liquides par million de mètres cubes normaux de gaz et **en ce que** l'activateur associé à la méthyldiéthanolamine, dans le liquide absorbant mis en contact avec le gaz renfermant du CO₂ et des hydrocarbures liquides, consiste en au moins un composé de formule H₂N-CₙH₂ₙ-NH-CH₂-CH₂OH, dans laquelle n représente un nombre entier allant de 1 à 4.

2. Procédé selon la revendication 1, **caractérisé en ce que** l'activateur associé à la MDEA est choisi parmi les composés de formule H₂N-(CH₂)ₚ-NH-CH₂-CH₂OH, dans laquelle p est en nombre entier égal à 2, 3 ou 4.

3. Procédé selon la revendication 2, **caractérisé en ce que** l'activateur consiste en le composé aminoéthyléthanolamine.

4. Procédé selon l'une des revendications 1 à 3, **caractérisé en ce que** le liquide absorbant se présente sous la forme d'une solution aqueuse de MDEA et de l'activateur.

5. Procédé selon la revendication 4, **caractérisé en ce que** la solution aqueuse de MDEA et de l'activateur renferme encore une quantité mineure d'un ou plusieurs solvants organiques du CO₂ solubles dans l'eau, notamment sulfolane, méthanol ou N-méthylpyrrolidone.

6. Procédé selon l'une des revendications 1 à 5, **caractérisé en ce que** la concentration du liquide absorbant en MDEA est comprise entre 1N et 6N et, de préférence, elle se situe de 2,5N à 5N.

7. Procédé selon l'une des revendications 1 à 6, **caractérisé en ce que** la quantité d'activateur, que l'on associe à la MDEA dans le liquide absorbant, est telle que le rapport du nombre de moles d'activateur au nombre total de moles d'activateur et de MDEA soit compris entre 0,01 et 0,5 et de préférence aille de 0,05 à 0,25.

8. Procédé selon l'une des revendications 1 à 7, **caractérisé en ce que** le gaz à traiter, en plus du CO₂ et des hydrocarbures liquides, renferme encore un ou plusieurs composés gazeux acides, autres que CO₂, comme, par exemple H₂S.

9. Procédé selon l'une des revendications 1 à 8, **caractérisé en ce que** la teneur globale en hydrocarbures liquides du gaz à traiter est comprise entre plus que 14 litres et 10 mètre cubes d'hydrocarbures liquides par million de mètres cubes normaux de gaz.

10. Procédé selon l'une des revendications 1 à 9, **caractérisé en ce que** la mise en contact du gaz à traiter avec le liquide absorbant, dans la zone d'absorption, est réalisée à des températures comprises entre 10°C et 100°C, plus particulièrement entre 30°C et 60°C, et sous des pressions absolues comprises entre 1,5 bars et 120 bars.

11. Procédé selon la revendication 10, **caractérisé en ce que** la pression dans la zone d'absorption est choisie de telle sorte que la pression partielle du CO₂ dans le gaz circulant dans ladite zone est égale ou supérieure à 3 bars absolus.

12. Procédé selon l'une des revendications 1 à 11, **caractérisé en ce que** la zone d'absorption, dans laquelle est réalisée la mise en contact du gaz à désacidifier avec le liquide absorbant, est pourvue d'un garnissage structuré ou non structuré.

13. Procédé selon l'une des revendications 1 à 12, **caractérisé en ce que** la régénération du liquide absorbant chargé de CO₂ et des autres composés gazeux acides éventuels, notamment H₂S,est réalisée par détente, en une ou plusieurs étapes, d'au moins une partie dudit liquide absorbant chargé.

14. Procédé selon la revendication 13, **caractérisé en ce que** la régénération du liquide absorbant chargé est réalisée en soumettant la totalité dudit liquide absorbant chargé à une détente, en une ou plusieurs étapes, pour libérer la majeure partie du CO₂ présent dans ledit liquide absorbant chargé, puis en soumettant le liquide absorbant détendu à une régénération complémentaire par stripage à la vapeur, par chauffage direct ou indirect du liquide absorbant, le liquide absorbant issu de la régénération complémentaire étant recyclé dans la zone d'absorption.

15. Procédé selon la revendication 14, **caractérisé en ce qu'**une partie seulement du liquide absorbant détendu est soumise à la régénération complémentaire par stripage, le liquide absorbant issu de ladite régénération complémentaire étant recyclé dans la partie supérieure de la zone d'absorption, tandis que la partie du liquide absorbant détendu non soumise à la régénération complémentaire est recyclée dans la zone d'absorption, en dessous du liquide absorbant régénéré par stripage.

16. Procédé selon l'une des revendications 1 à 12, **caractérisé en ce que** la régénération du liquide absorbant chargé est réalisée en soumettant une fraction du liquide absorbant chargé à une détente, en une ou plusieurs étapes, pour libérer la majeure partie du CO₂ qu'elle renferme, tandis que la fraction restante du liquide absorbant chargé est soumise directement à une régénération par stripage à la vapeur, par chauffage direct ou indirect de ladite fraction restante, la fraction de liquide absorbant régénérée par stripage étant recyclée dans la partie supérieure de la zone d'absorption tandis que la fraction de liquide absorbant détendue est recyclée dans la zone d'absorption en dessous du liquide absorbant régénéré par stripage.

## Patentansprüche

1. Regeneratives Verfahren zur Entsäuerung eines CO₂ sowie flüssige Kohlenwasserstoffe enthaltenden Gases der Art, die einen Absorptionsschritt umfasst, bei dem das zu behandelnde Gas in einer Absorptionszone mit einer Absorptionsflüssigkeit auf Basis von Methyldiethanolamin (MDEA) und einem Beschleuniger für die CO₂-Absorption durch das genannte Amin in Kontakt gebracht wird, um ein behandeltes Gas mit reduziertem CO₂-Gehalt und eine mit CO₂ beladene Absorptionsflüssigkeit herzustellen, sowie einen Regenerationsschritt, bei dem die beladene Absorptionsflüssigkeit einer Regenerationsbehandlung unterzogen wird, um das darin gebundene CO₂ freizusetzen und um einerseits mindestens eine CO₂-reiche saure Gasfraktion und andererseits mindestens eine regenerierte Absorptionsflüssigkeit, die in die Absorptionszone zurückgeführt wird, herzustellen, wobei das Verfahren **dadurch gekennzeichnet ist, dass** der Gesamtgehalt an flüssigen Kohlenwasserstoffen im zu entsäuernden CO₂ enthaltenden Gas mehr als 14 Liter flüssige Kohlenwasserstoffe pro Million Normalkubikmeter Gas beträgt und dass der dem Methyldiethanolamin beigefügte Aktivator in der Absorptionsflüssigkeit, die mit dem CO₂ und flüssige Kohlenwasserstoffe enthaltenden Gas in Kontakt gebracht wird, aus mindestens einer Verbindung der Formel H₂N-CₙH₂ₙ-NH-CH₂-CH₂OH besteht, wobei n eine ganze Zahl zwischen 1 und 4 bedeutet.

2. Verfahren nach Anspruch 1, **dadurch gekennzeichnet, dass** der dem MDEA beigefügte Aktivator aus den Verbindungen der Formel H₂N-(CH₂)ₚ-NH-CH₂-CH₂OH gewählt ist, wobei p eine ganze Zahl gleich 2,3 oder 4 ist.

3. Verfahren nach Anspruch 2, **dadurch gekennzeichnet, dass** der Aktivator aus der Verbindung Aminoethylethanolamin besteht.

4. Verfahren nach einem der Ansprüche 1 bis 3, **dadurch gekennzeichnet, dass** die Absorptionsflüssigkeit in Form einer wässrigen Lösung von MDEA und des Aktivators vorliegt.

5. Verfahren nach Anspruch 4, **dadurch gekennzeichnet, dass** die wässrige Lösung des MDEA und des Aktivators außerdem eine geringe Menge eines oder mehrerer wasserlöslicher organischer CO₂-Lösungsmittel, insbesondere Sulfolan, Methanol oder N-Methylpyrrolidon enthält.

6. Verfahren nach einem der Ansprüche 1 bis 5, **dadurch gekennzeichnet, dass** die MDEA-Konzentration in der Absorptionsflüssigkeit zwischen 1 N und 6 N liegt, vorzugsweise zwischen 2,5 N und 5 N.

7. Verfahren nach einem der Ansprüche 1 bis 6, **dadurch gekennzeichnet, dass** die Menge des Aktivators, der dem MDEA in der Absorptionsflüssigkeit beigefügt wird, so gewählt ist, dass das Verhältnis der Molzahl des Aktivators zur Gesamtmolzahl von Aktivator und MDEA zwischen 0,01 und 0,5 liegt, vorzugsweise zwischen 0,05 und 0,25.

8. Verfahren nach einem der Ansprüche 1 bis 7, **dadurch gekennzeichnet, dass** das zu behandelnde Gas neben dem CO₂ und den flüssigen Kohlenwasserstoffen noch eine oder mehrere saure gasförmige Verbindungen außer CO₂ enthält, wie zum Beispiel H₂S.

9. Verfahren nach einem der Ansprüche 1 bis 8, **dadurch gekennzeichnet, dass** der Gesamtgehalt an flüssigen Kohlenwasserstoffen des zu behandelnden Gases zwischen mehr als 14 Litern und 10 Kubikmetern flüssige Kohlenwasserstoffe pro Million Normalkubikmeter Gas liegt.

10. Verfahren nach einem der Ansprüche 1 bis 9, **dadurch gekennzeichnet, dass** das zu behandelnde Gas in der Absorptionszone mit der Absorptionsflüssigkeit bei Temperaturen zwischen 10 °C und 100 °C, insbesondere zwischen 30 °C und 60 °C und bei einem absolutem Druck zwischen 1,5 bar und 120 bar in Kontakt gebracht wird.

11. Verfahren nach Anspruch 10, **dadurch gekennzeichnet, dass** der Druck in der Absorptionszone so gewählt ist, dass der Partialdruck des CO₂ in dem in der genannten Zone zirkulierenden Gas gleich oder größer als 3 bar absolut ist.

12. verfahren nach einem der Ansprüche 1 bis 11, **dadurch gekennzeichnet, dass** die Absorptionszone, in der das zu entsäuernde Gas mit der Absorptionsflüssigkeit in Kontakt gebracht wird, einen Füllkörper mit oder ohne Struktur aufweist.

13. Verfahren nach einem der Ansprüche 1 bis 12, **dadurch gekennzeichnet, dass** die Regeneration der mit CO₂ und den anderen möglichen sauren gasförmigen Verbindungen wie H₂S beladenen Absorptionsflüssigkeit durch Entspannung in einer oder mehreren Stufen mindestens eines Teils der beladenen Absorptionsflüssigkeit durchgeführt wird.

14. Verfahren nach Anspruch 13, **dadurch gekennzeichnet, dass** die Regeneration der beladenen Absorptionsflüssigkeit durchgeführt wird, indem man die gesamte beladene Absorptionsflüssigkeit einer Entspannung in einer oder mehreren Stufen unterzieht, um den überwiegenden Teil des in der beladenen Absorptionsflüssigkeit vorliegenden CO₂ freizusetzen, und indem man die entspannte Absorptionsflüssigkeit einer ergänzenden Regeneration durch Dampfstrippen durch direktes oder indirektes Erhitzen der Absorptionsflüssigkeit unterzieht, wobei die aus der ergänzenden Regeneration gewonnene Absorptionsflüssigkeit in die Absorptionszone zurückgeführt wird.

15. Verfahren nach Anspruch 14, **dadurch gekennzeichnet, dass** nur ein Teil der entspannten Absorptionsflüssigkeit der ergänzenden Regeneration durch Strippung unterzogen wird, wobei die aus der ergänzenden Regeneration gewonnene Absorptionsflüssigkeit in den oberen Teil der Absorptionszone zurückgeführt wird, während der Teil der entspannten Absorptionsflüssigkeit, der nicht der ergänzenden Regeneration unterzogen wurde, in die Absorptionszone unter die durch Strippung regenerierte Absorptionsflüssigkeit zurückgeführt wird.

16. Verfahren nach einem der Ansprüche 1 bis 12, **dadurch gekennzeichnet, dass** die Regeneration der beladenen Absorptionsflüssigkeit durchgeführt wird, indem man eine Fraktion der beladenen Absorptionsflüssigkeit einer Entspannung in einer oder mehreren Stufen unterzieht, um den überwiegenden Teil des enthaltenen CO₂ freizusetzen, während der restliche Teil der beladenen Absorptionsflüssigkeit direkt einer Regeneration durch Dampfstrippen durch direktes oder indirektes Erhitzen der genannten restlichen Fraktion unterzogen wird, wobei die durch Strippung regenerierte Fraktion der Absorptionsflüssigkeit in den oberen Teil der Absorptionszone zurückgeführt wird, während die entspannte Fraktion der Absorptionsflüssigkeit in die Absorptionszone unter die durch Strippung regenerierte Absorptionsflüssigkeit zurückgeführt wird.

## Claims

1. Regenerative process for the deacidification of a gas containing CO2 and liquid hydrocarbons, of the type including an absorption step, in which the gas to be treated is brought into contact, in an absorption zone, with an absorbent liquid based on methyldiethanolamine (MDEA) and an accelerator of the absorption of CO2 by the said amine, in order to produce a treated gas with reduced CO2 content and an absorbent liquid loaded with CO2, and a regeneration step, in which the loaded absorbent liquid is subjected to a regeneration treatment in order to release the CO2 which it has bound, and to produce, on the one hand, at least one acid gas fraction rich in CO2 and, on the other hand, at least one regenerated absorbent liquid which is recycled into the absorption zone, the said process being **characterized in that** the overall liquid hydrocarbon .content in the gas to be deacidified containing CO2 is greater than 14 litres of liquid hydrocarbons per million standard cubic metres of gas, and **in that** the activator combined with methyldiethanolamine in the absorbent liquid brought into contact with the gas containing CO2 and liquid hydrocarbons consists of at least one compound of formula H₂N-CₙH2ₙ-NH-CH₂-CH₂OH in which n represents an integer ranging from 1 to 4.

2. Process according to Claim 1, **characterized in that** the activator combined with MDEA is selected from the compounds of formula H₂N-(CH₂)ₚ-NH-CH₂-CH₂OH, in which p is an integer equal to 2, 3 or 4.

3. Process according to Claim 2, **characterized in that** the activator consists of the compound aminoethylethanolamine.

4. Process according to one of Claims 1 to 3,
**characterized in that** the absorbent liquid is in the form of an aqueous solution of MDEA and the activator.

5. Process according to Claim 4, **characterized in that** the aqueous solution of MDEA and the activator furthermore contains a minor amount of one or more organic solvents of CO2 which are soluble in water, in particular sulpholane, methanol or N-methylpyrrolidone.

6. Process according to one of Claims 1 to 5, **characterized in that** the concentration of MDEA in the absorbent liquid is between 1N and 6N, and is preferably from 2.5N to 5N.

7. Process according to one of Claims 1 to 6, **characterized in that** the amount of activator which is combined with the MDEA in the absorbent liquid is such that the ratio of the number of moles of activator to the total number of moles of activator and MDEA is between 0.01 and 0.5, and preferably ranges from 0.05 to 0.25.

8. Process according to one of Claims 1 to 7, **characterized in that**, further to CO2 and liquid hydrocarbons, the gas to be treated also contains one or more acid gas compounds other than CO2, such as for example H2S.

9. Process according to one of Claims 1 to 8, **characterized in that** the overall liquid hydrocarbon content in the gas to be treated is between more than 14 litres and 10 cubic metres of liquid hydrocarbons per million standard cubic metres of gas.

10. Process according to one of Claims 1 to 9, **characterized in that** the gas to be treated is brought into contact with the absorbent liquid, in the absorption zone, at temperatures of between 10°C and 100°C, more particularly between 30°C and 60°C, and under absolute pressures of between 1.5 bar and 120 bar.

11. Process according to Claim 10, **characterized in that** the pressure in the absorption zone is selected in such a way that the partial pressure of CO2 in the gas flowing through the said zone is equal to or greater than 3 bar absolute.

12. Process according to one of Claims 1 to 11, **characterized in that** the absorption zone, in which the gas to be deacidified is brought into contact with the absorbent liquid, is provided with structured or unstructured packing.

13. Process according to one of Claims 1 to 12, **characterized in that** the absorbent liquid loaded with CO2 and other possible acid gas compounds, in particular H2S, is regenerated by pressure reduction, in one or more steps, of at least some of the said loaded absorbent liquid.

14. Process according to Claim 13, **characterized in that** the loaded absorbent liquid is regenerated by subjecting all of the said loaded absorbent liquid to pressure reduction, in one or more steps, in order to release the majority of the CO2 present in the said loaded absorbent liquid, then by subjecting the reduced-pressure absorbent liquid to complementary regeneration by steam stripping, by direct or indirect heating of the absorbent liquid, the absorbent liquid resulting from the complementary regeneration being recycled into the absorption zone.

15. Process according to Claim 14, **characterized in that** only a portion of the reduced-pressure absorbent liquid is subjected to the complementary regeneration by stripping, the absorbent liquid resulting from the said complementary regeneration being recycled into the upper part of the absorption zone, while the portion of the reduced-pressure absorbent liquid not subjected to the complementary regeneration is recycled into the absorption zone, below the absorbent liquid regenerated by stripping.

16. Process according to one of Claims 1 to 12, **characterized in that** the loaded absorbent liquid is regenerated by subjecting a fraction of the loaded absorbent liquid to pressure reduction, in one or more steps, in order to release the majority of the CO2 which it contains, while the remaining fraction of the loaded absorbent liquid is subjected directly to regeneration by steam stripping, by direct or indirect heating of the said remaining fraction, the absorbent liquid fraction regenerated by stripping being recycled into the upper part of the absorption zone, while the reduced- pressure absorbent liquid fraction is recycled into the absorption zone below the absorbent liquid regenerated by stripping.
